# FASCICULE DE BREVET EUROPEEN

(11) **EP 1 582 022 B1**
(45) Date de publication et mention de la délivrance du brevet: **13.08.2008**
(21) Numéro de dépôt: 03798955.5
(22) Date de dépôt: 03.10.2003
(51) Int. Cl.: H04K 1/00, H04N 7/167

(54) **SYSTEME D'EMBROUILLAGE SECURISE DE FLUX AUDIO**
SYSTEM ZUR GESICHERTEN VERSCHLÜSSELUNG EINES AUDIOSTROMS
SECURE AUDIO STREAM SCRAMBLING SYSTEM

(30) Priorité: 03.10.2002 FR 0212267
(43) Date de publication de la demande: 05.10.2005
(73) Titulaire: Medialive, 75116 Paris (FR)
(72) Inventeur: LECOMTE, Daniel, F-75116 Paris (FR); PARAYRE-MITZOVA, Daniela, F-75018 Paris (FR)
(74) Mandataire: Breese, Pierre
(86) Numéro de dépôt international: PCT/FR2003/002913
(87) Numéro de publication internationale: WO 2004/032418

(56) Documents cités:
- WO-A-99/55089
- WO-A-02/062008
- DE-C- 19 907 964
- US-A1- 2002 154 774

## Description

La présente invention se rapporte au domaine du traitement des flux audio numériques.

On se propose dans la présente invention de fournir un système permettant d'embrouiller auditivement et de recomposer un contenu audio numérique.

La présente invention se rapporte plus particulièrement à un dispositif capable de transmettre de façon sécurisée un ensemble de flux audio de haute qualité auditive vers un lecteur (" player ") musical ou de parole pour être enregistré dans la mémoire ou sur le disque dur d'un boîtier reliant le réseau de télétransmission au player audio ou télévision, tout en préservant la qualité auditive mais en évitant toute utilisation frauduleuse comme la possibilité de faire des copies pirates de programmes audio enregistrés dans la mémoire ou sur le disque dur du boîtier décodeur.

Dans la présente invention, on entend sous le terme "embrouillage" la modification d'un flux audio numérique par des méthodes appropriées de manière à ce que ce flux reste conforme à la norme avec laquelle il a été encodé numériquement, tout en le rendant jouable par un lecteur audio, mais altéré du point de vue de la perception auditive humaine.

Dans la présente invention, on entend sous le terme " désembrouillage " le processus de restitution par des méthodes appropriées du flux initial, le flux audio restitué après le désembrouillage étant identique au flux audio initial.

Le signal audio peut posséder une ou plusieurs composantes : parole, musique, bruits, sons naturels, sons synthétiques et/ou tout signal audio de mêmes caractéristiques, composantes qui sont traitées numériquement en vue d'applications multimédia numériques diverses, comme par exemple la télévision numérique, les DVD, les disques, les CD musicaux, les services Internet, les services multimédias interactifs.

Les méthodes mathématiques pour traiter le signal audio sont très nombreuses. On utilise habituellement des transformations fréquentielles et temporelles, des algorithmes de prédiction ou statistiques, des mécanismes de production des sons et de la parole, des analyses acoustiques et des mécanismes utilisant les propriétés de perception de l'oreille.

Par exemple, les codeurs de la parole sont basés sur ses caractéristiques statistiques, telles que variance et auto corrélation, donnant naissance à des algorithmes prédictifs, adaptatifs, également sur ses propriétés spectrales (pitch (relatif au fondamental), formants (relatifs à l'enveloppe spectrale), voisement, non voisement). De nombreux algorithmes existent également dans le domaine fréquentiel, temporel, paramétrique, de codage par analyse et synthèse.

Pour les diverses applications numériques, de plus en plus de méthodes fiables de modélisation, quantification, compression et transmission sont mises au point et ont donné lieu à de multiples codeurs audio de plus en plus performants en termes de qualité, compression, coût et fiabilité. Par exemple, le MPEG-AAC (Motion Picture Expert Group - Advanced Audio Coding) est actuellement considéré comme la norme de compression des signaux audio en bande Hi-Fi la plus efficace et la plus universelle.

Cependant, si de plus en plus d'applications multimédias sont présentes sur le marché, elles sont également très souvent piratées.

Pour assurer la protection audio d'un système quelconque de diffusion (audio ou audiovisuel), il est indispensable de trouver une méthode qui rend impossible la reconstitution d'un flux audio modifié.

L'art antérieur connaît déjà par la demande de brevet internationale WO 0058963 (Liquid Audio) un système de sécurité pour les lecteurs de musique portables. Des données comme un morceau musical sont sauvegardées en tant que morceau portable sécurisé (SPT : secure portable track), qui peut être lié à un ou plusieurs lecteurs (" players ") et peut être lié à un moyen de sauvegarde particulier, restreignant ainsi la lecture du SPT à des players spécifiques et assurant que la lecture est seulement effectuée à partir du moyen de sauvegarde original. Le SPT est lié à un player par encryptage de données du SPT en utilisant une clé de sauvegarde qui est unique au player, difficile à changer et est gardée par le lecteur dans des conditions de sécurité strictes. Le SPT est lié à un moyen particulier de sauvegarde en incluant des données identifiant uniquement le moyen de sauvegarde dans une forme résistante à la falsification, c'est-à-dire signée de façon cryptée.

On connaît également, par le brevet américain US 4600941 (Sony), un système d'embrouillage pour les signaux audio dans lequel un signal audio est divisé en blocs, chaque bloc étant formé d'une pluralité de trames, la pluralité de trames étant réarrangées sur une base de temps dans un ordre prédéterminé à chaque bloc de façon à être encodées et le signal encodé est ré-arrangé sur une base de temps dans un ordre original de façon à être décodé, dans lequel sont fournis un premier circuit de traitement du signal pour insérer une portion redondante dans une portion entre des trames contiguës et comprimer en temps de base les trames en réponse aux portions redondantes lors de l'encodage, un circuit générant un signal pour insérer un signal de contrôle autre qu'une information audio dans les portions redondantes, un circuit de détection de signal de contrôle pour détecter le signal de contrôle lors du décodage et un deuxième circuit de traitement du signal pour enlever les portions redondantes en synchronisme avec le signal de contrôle détecté et décompressant en temps de base les trames en réponse aux portions redondantes.

On connaît également, par le brevet américain US 5058159 (Macrovision Corporation), une méthode et un système pour embrouiller et désembrouiller des signaux d'information audio. Les signaux audio sont embrouillés en inversant le spectre de fréquence original de telle sorte que les portions de fréquence qui sont à l'origine en bas dans la bande de fréquence audio sont déplacées en haut tandis que les portions à l'origine en haut de la bande sont déplacées en bas. Un son pilote d'une fréquence connue est enregistré avec les signaux audio aux fréquences déplacées. Lors de la reproduction, chaque variation en phase et en fréquence sont recherchées par le son pilote, qui est utilisé pour générer le signal de démodulation pour reconstituer le contenu original en fréquences des signaux audio.

L'art antérieur connaît également document WO 00 55089 A qui présente une méthode et un système pour l'embrouillage d'échantillons numériques compressés ou non-compressés représentant des données audio et vidéos, de manière à ce que le contenu de ces échantillons soit dégradé, mais reconnaissable, ou sinon fourni avec une qualité requise donnée. Un nombre donné de LSBs (« Least Significant Bits », bits de poids le plus faible) des données sont embrouillées pour chaque échantillon trame par trame, de manière adaptative en fonction de la dynamique des valeurs possibles, les bits de poids le plus fort étant inchangés. Cette solution représente une solution de cryptage bien connue par l'homme de l'art, à l'aide de clé(s) de cryptage. Les clés de cryptage sont transmises en une fois ou entièrement dans le flux avec les données cryptées, ce qui rend le flux vulnérable aux tentatives de piratage, étant donné que tous les éléments composant le flux audiovisuel restent à l'intérieur dudit flux. Cet art antérieur ne répond pas aux objectifs de forte sécurisation de la présente invention.

L'invention DE 199 07 964 sur lequel 81 sont fondé le préambule de la revendication 1 concerne un dispositif utilisé pour générer un flux de données crypté qui représente un signal audio et/ou vidéo. Cet art antérieur développe des moyens et des techniques pour protéger le flux audio (et/ou vidéo) en modifiant à l'aide d'une ou de plusieurs clés, certaines informations du flux d'origine, par exemple le cryptage est effectué en modifiant les LSBs (« Least Significant Bits », bits de poids le plus faible) des coefficients spectraux.

Etant donné que la protection est effectuée à l'aide de clés de cryptage, toute l'information initiale reste présente à l'intérieur du flux protégé. Cet art antérieur ne répond pas aux critères de haute sécurité, objet de la présente invention.

L'état de l'art fait preuve de beaucoup de systèmes de protection de flux audio, essentiellement basés sur le cryptage des données, en rajoutant des clefs de cryptage indépendantes du contenu du flux audio, et qui donc modifient le format du flux structuré. Une réalisation particulière et différente est celle de la société Coding Technologies, qui consiste à protéger par embrouillage une partie sélectionnée du bitstream (on appelle " bitstream " le flux binaire à la sortie de l'encodeur audio) et non pas le bitstream entier. Les parties protégées représentent les valeurs spectrales du signal audio, menant à ce que lors du décodage sans décrypter, le flux audio est distordu et désagréable à l'écoute.

La présente invention entend remédier aux inconvénients de l'art antérieur en proposant une méthode de protection basée sur le principe de la suppression et le remplacement d'informations décrivant le signal audio.

La présente invention propose la protection du flux audio basée intégralement sur la structure du bitstream du flux audio, protection qui consiste à modifier des parties ciblées du bitstream relatives à la modélisation et caractéristiques du flux audio. Les vraies valeurs sont extraites du bitstream et stockées en tant qu'information complémentaire, et à leurs places sont mises des valeurs aléatoires ou calculées ou des valeurs permutées, et cela pour la totalité du flux audio. Ainsi, on rajoute des " leurres " pour le décodeur, qui reçoit en entrée un flux audio complètement conforme au format audio d'origine, mais qui n'est pas acceptable du point de vue auditif par un être humain.

A l'inverse de la plupart des systèmes de cryptage déjà connus par l'homme de l'art, le principe décrit ci-dessous permet d'assurer un haut niveau de protection tout en réduisant le volume d'information nécessaire au décodage.

La protection, réalisée de façon conforme à l'invention, est basée sur le principe de la suppression et le remplacement d'informations décrivant le signal audio par une méthode quelconque, soit : substitution, modification ou déplacement de l'information. Cette protection est également basée sur la connaissance de la structure du flux à la sortie de l'encodeur audio : le brouillage dépend du contenu dudit flux audio numérique. La reconstitution du flux originel s'effectue sur l'équipement destinataire à partir du flux principal modifié déjà présent sur l'équipement destinataire et de l'information complémentaire envoyée en temps réel comprenant des données et des fonctions exécutées à l'aide de routines (ensemble d'instructions) numériques.

Connaissant la manière dont sont effectués la modélisation, la compression et l'encodage du signal audio pour le codeur audio et/ou le standard ou la norme donnés, il est toujours possible d'extraire à partir du bitstream les paramètres principaux qui le décrivent et qui sont envoyés au décodeur.

Une fois ces paramètres identifiés, ils sont modifiés de manière à ce que le flux audio généré par le codeur et/ou le standard donnés soit conforme à ce codeur et/ou ce standard. De plus, la modification assure la stabilité du signal sonore, mais le rend inexploitable par l'utilisateur, car il est embrouillé. Cependant, il peut être compris et interprété dans le décodeur correspondant à son encodage et joué par un player sans que ce dernier soit perturbé.

La modification d'une ou de plusieurs des composantes dudit signal audio (enveloppe spectrale, fondamental ou harmoniques, modèle psycho-acoustique, évolution temporelle, Rapport Signal/Bruit, composition, compression, quantification, transformation) va provoquer sa dégradation du point de vue auditif et le transformer en un signal complètement incompréhensible et désagréable du point de vue de la perception auditive subjective. La partie du signal audio ou la composante le décrivant qui sera modifiée dépend de son encodage, pour chaque codeur-décodeur donné, et ceci que ce soit pour la parole, la musique, le bruit ou les effets spéciaux, ou tout signal audio du même type. Selon la manière dont sont réalisés l'encodage et la transmission des paramètres résultants, on peut avoir une information directe ou indirecte sur les principales caractéristiques du signal audio et donc les modifier. Ce principe est applicable pour tous les types de codeurs audio faisant ou ne faisant pas partie d'un standard ou d'une norme concrète, ainsi que pour toutes leurs couches, de base ou d'amélioration (base and enhancement layers) ou la combinaison des deux.

A cet effet, l'invention concerne un procédé pour la distribution de séquence audio numérique selon la revendication 1.

Selon une variante, le flux principal modifié est enregistré sur l'équipement destinataire préalablement à la transmission de l'information complémentaire sur l'équipement destinataire.

Selon une autre variante, le flux principal modifié et l'information complémentaire sont transmis ensemble en temps réel.

De préférence, la modification du flux originel s'applique à au moins une trame audio numérique structurée.

Avantageusement, les modifications sont effectuées de manière à ce que le flux principal modifié soit de la même taille que flux numérique originel.

Avantageusement, le format de flux nominal est défini par un standard ou un codeur commun à une communauté d'utilisateurs.

Selon une variante, le procédé comporte une étape d'analyse d'une partie au moins du flux originel, ladite étape d'analyse déterminant la nature des modifications desdits coefficients.

Selon une autre variante, l'étape d'analyse détermine la modification des coefficients en prenant en compte la structure concrète d'une partie au moins du flux originel.

Avantageusement, la modification est appliquée à au moins un premier facteur d'échelle d'au moins une trame.

Avantageusement, la modification est appliquée à au moins un coefficient spectral d'au moins une trame.

De préférence, le procédé décrit précédemment comporte une étape préalable de conversion analogique/numérique sous un format structuré, le procédé étant appliqué à un signal audio analogique.

Selon un mode de mise en oeuvre particulier, le flux comprend au moins une trame audio structurée selon le format MPEG-2 layer 3 (MP3), ou AAC (Advanced Audio Coding), ou CELP (Code Excited Linear Prediction), ou HVXC (Harmonic Vector eXcitation Coding), ou HILN (Harmonic and Individual Lines plus Noise), ou AC-3 (Advanced Coding - 3).

De préférence, ladite information complémentaire de modification comprend au moins une routine numérique apte à exécuter une fonction.

Avantageusement, ladite information complémentaire de modification est subdivisée en au moins deux sous-parties.

Selon une variante, lesdites sous-parties de l'information complémentaire de modification peuvent être distribuées par différents médias.

Selon une autre variante, lesdites sous-parties de l'information complémentaire de modification peuvent être distribuées par le même média.

Avantageusement, l'information complémentaire est transmise sur un vecteur physique.

Selon une variante, l'information complémentaire est transmise en ligne.

De préférence, on procède au décodage d'un flux principal par application d'une fonction de reconstruction à partir d'une information complémentaire provenant d'une voie séparée du vecteur dudit flux principal, et à un décodage dudit flux reconstruit par un procédé adapté audit format nominal.

De préférence, le flux reconstitué à partir du flux principal modifié et l'information complémentaire est strictement identique au flux originel.

L'invention concerne également un système pour la distribution de séquences audio numériques selon la revendication 21.

L'invention concerne aussi un équipement et un procédé pour la restitution de séquences audio numériques selon les revendications 22 et 29.

On comprendra mieux l'invention à l'aide de la description, faite ci-après à titre purement explicatif, d'un mode de réalisation de l'invention, en référence à la figure annexée :

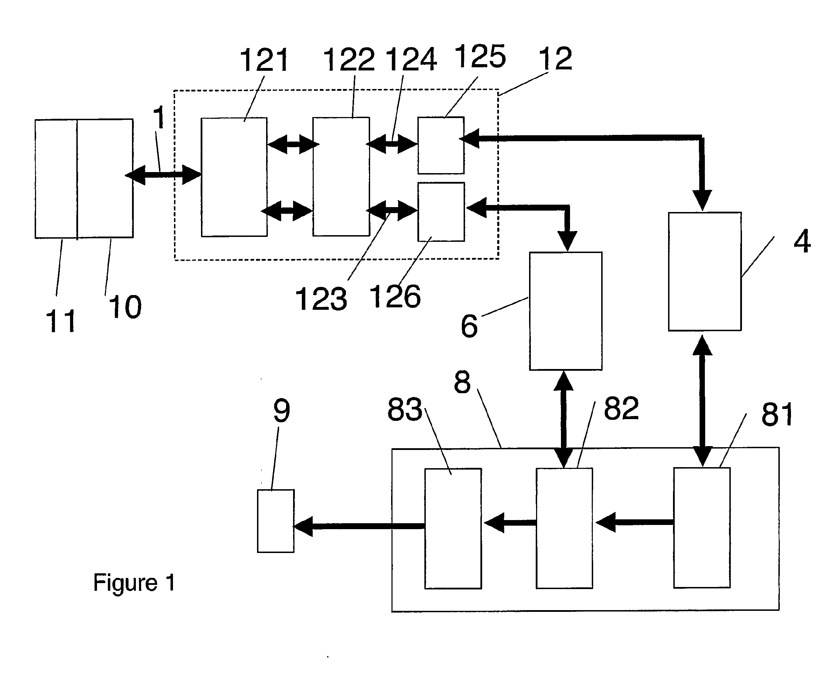

- la figure 1 illustre un mode de réalisation particulier du système client-serveur conforme à l'invention.

Considérons un exemple de réalisation du système. Sur le dessin en annexe, la figure 1 représente un mode de réalisation particulier du système client-serveur conforme à l'invention.

Le flux audio de type MPEG-2 layer 3 (également appelé MP3) que l'on souhaite sécuriser (1) est passé à un système d'analyse (121) et d'embrouillage (122) qui va générer un flux principal modifié et une information complémentaire.

Le flux d'origine (1) peut être directement sous forme numérique (10) ou sous forme analogique (11). Dans ce dernier cas, le flux analogique (11) est converti par un codeur non représenté en un format numérique (10). Dans la suite du texte, nous noterons (1) le flux numérique audio d'entrée.

Un premier flux (124) au format MPEG-2 layer 3, de format identique au flux numérique d'entrée (1) en dehors de ce que certains des coefficients, valeurs et/ou vecteurs ont été modifiés, est placé dans une mémoire tampon de sortie (125). L'information complémentaire (123), de format quelconque, contient les références des parties des échantillons audio qui ont été modifiées et est placée dans le tampon (126). En fonction des caractéristiques du flux d'entrée (1), le système d'analyse (121) et d'embrouillage (122) décide quel embrouillage appliquer et quels paramètres du flux modifier en fonction du type de codeur audio avec lequel il a été encodé (par exemple MPEG-2 layer 3, MP3Pro... ou bien AAC, CELP, HVXC, HILN, ou leurs combinaisons si le flux traité est un flux MPEG-4).

Le flux MPEG-2 (125) est ensuite transmis, via un réseau haut débit (4) de type hertzien, câble, satellite, etc., au client (8), et plus précisément dans sa mémoire (81) de type RAM, ROM, disque dur. Lorsque le destinataire (8) fait la demande d'écouter une séquence audio présente dans sa mémoire (81), deux éventualités sont possibles :
- soit le destinataire (8) ne possède pas les droits nécessaires pour écouter la séquence audio. Dans ce cas, le flux (125) généré par le système de brouillage (122) présent dans sa mémoire (81) est passé au système de synthèse (82), qui ne le modifie pas et le transmet à l'identique à un lecteur audio classique (83) et son contenu, fortement dégradé auditivement, est joué par le player (83) sur les hauts parleurs ou le casque (9).
- soit le destinataire (8) possède les droits pour écouter la séquence audio. En fonction des droits de l'utilisateur, le serveur 12 transmet l'information complémentaire (126) appropriée par la liaison (6), en totalité ou partiellement. Dans ce cas, le système de synthèse fait une demande d'audition au serveur (12) contenant l'information nécessaire (126) à la récupération de la séquence audio originale (1). Le serveur (12) envoie alors par la liaison (6) via des réseaux de télécommunication (6) type ligne téléphonique analogique ou numérique, DSL (Digital Subscriber Line), BLR (Boucle Locale Radio), DAB (Digital Audio Broadcasting) ou de télécommunications mobiles numériques (GSM, GPRS, UMTS) l'information complémentaire (126) permettant la reconstitution de la séquence audio de façon à ce que le client (8) puisse écouter et/ou stocker la séquence audio. Le système de synthèse (82) procède alors au désembrouillage de l'audio par la reconstruction du flux d'origine en combinant le flux principal modifié (125) et l'information complémentaire (126). Le flux audio ainsi obtenu en sortie du système de synthèse (82) est alors transmis au player audio classique (83) qui diffuse l'audio originale sur un casque ou des hauts parleurs (9).

Plus particulièrement, notre application est concentrée sur le module d'analyse (121) et d'embrouillage (122), étant donné la grande multitude des codeurs audio.

Considérons maintenant des exemples de réalisation du module 12.

Concernant l'encodage avec le CELP (Code Excited Linear Prediction) inclus dans la norme MPEG-4, les paramètres caractérisant le signal audio sont extraits et encodés à l'aide d'un codage entropique dans le bitstream. Les caractéristiques audio telles que les indices des coefficients LPC (Linear Predictive Coding), le délai (lag) (pour le codebook adaptatif), les index d'excitation (pour le codebook, ou table de valeurs fixe), les indices de gains, etc. sont transmis via le bitstream au décodeur pour la reconstruction du signal. Les coefficients LPC sont transformés en LAR (Log Area Ratio) et ensuite codés avec des codes de Huffman. Si on modifie (par exemple par substitution avec une valeur différente quelconque ou calculée, par inversion de bits, par annulation ou permutation) une ou des valeurs indices des coefficients LPC, ou des gains et index, on va modifier la constitution du signal audio et fausser le modèle spectral. Le bitstream (correspondant au flux généré (124)) étant conforme sera décodé correctement, mais la séquence audio décodée sera détériorée par rapport à la séquence originale, donc sera désagréable pour une oreille humaine ou non audible.

Le principe reste le même pour tous les exemples qui suivent, avec la différence qu'il est appliqué à différents paramètres du signal audio provenant de la modélisation, les transformations mathématiques, la quantification ou la compression, relatives à l'encodeur-décodeur audio donné. Les paramètres du signal audio à modifier pour chaque codeur sont donnés à titre d'exemple, la présente invention ne se limite ni aux paramètres cités, ni aux codeurs cités.

Avantageusement, pour chaque exemple de réalisation, chaque valeur de substitution est de même taille que la valeur substituée.

Avantageusement, pour chaque exemple de réalisation, la taille du flux principal modifié est identique à la taille du flux originel.

Avec le codeur MPEG-2 layer 3 (ou MP3) on obtient les caractéristiques du signal audio suite à un traitement par bancs de filtres sous forme de lignes spectrales, quantifiées par une technique de facteurs d'échelle et transformées en MDCT (Modified Direct Cosine Transform), puis quantifiées et codées par la suite avec le codage de Huffman. En modifiant les codes de Huffman relatifs aux valeurs des coefficients MDCT, ou les facteurs d'échelle pour la quantification, ou en modifiant les coefficients de prédiction pour le codage multi canal, on obtient une détérioration importante du signal audio.

Le bistream MPEG-2 layer 3 est constitué de la manière suivante : entête, CRC (Check Redundancy Code), side information (contenant les paramètres relatifs à l'encodage) et Main data, les Main data contiennent les facteurs d'échelle, les codes de Huffman et les données complémentaires qui dans notre cas représentent l'extension multi canal (qui contient à son tour une structure similaire, à savoir comprenant aussi les facteurs d'échelle, les coefficients de prédiction et les codes de Huffman représentant les coefficients MDCT (Modified Direct Cosine Transform) des lignes spectrales pour la couche multi canal. Un exemple de modification pour la couche multi canal est d'extraire une valeur donnée des facteurs d'échelle ou des coefficients de prédiction et les remplacer par une valeur aléatoire ou fixe calculée de manière à respecter la conformité et la taille du flux audio. Dans ce cas, lors du décodage, le décodeur reconstruira le flux audio avec une ou des valeurs qui ne correspondront pas à ses caractéristiques réelles. Changer les facteurs d'échelle va augmenter le bruit de quantification. Une autre possibilité est de permuter les coefficients de Huffman relatifs aux coefficients quantifiés MDCT. Par exemple, dans la partition " big_values ", les valeurs sont directement codées à partir de tables de Huffman en valeurs absolues et par paires de la manière suivante :
- hcod[|x|][|y|] est le code de Huffman pour les valeurs x et y.
- hlen[|x|][|y|] est la longueur du code de Huffman pour les valeurs x et y.

Si une ou deux des valeurs x et y sont différentes de zéro, un ou deux bits de signe sont rajoutés. On effectue une permutation entre les valeurs x et y au niveau des paramètres hcod et hlen, la permutation revient à intervertir les bits de poids le plus faible avec les bits de poids le plus fort de hcod et hlen. On peut également inverser le bit de signe. Une autre possibilité est substituer la valeur hcod[|x|][|y|] avec une valeur appartenant à la même table de Huffman et de longueur hlen[|x|][|y|]. Ces modifications et la modification des coefficients de prédiction changent la composition spectrale du signal audio, le signal audio est déformé.

L'encodeur HVXC (Harmonic Vector excitation Coding) pour la parole et l'encodeur HILN (Harmonic and Individual Lines plus Noise) (norme MPEG-4) pour la musique sont des codeurs paramétriques qui codent le signal audio séparément ou conjointement en fonction de son contenu. Par exemple, le bitstream provenant du HVXC contient les valeurs des LSP (Line Spectral Pairs) reflétant les paramètres LPC. Les LSP sont quantifiés vectoriellement, stabilisés dans la valeur de lsp_current[] afin d'assurer la stabilité du filtre de synthèse LPC et ensuite rangés dans un bitstream en ordre ascendant, avec un minimum de distance entre coefficients adjacents. Permuter ou modifier deux coefficients, par exemple, dans le bitstream revient à déformer l'enveloppe spectrale.

Le codeur AC-3 (Advanced Coding) de Dolby effectue la transformation du signal audio temps - fréquence et l'enveloppe spectrale est représentée sous forme d'exponentielles. Une procédure spéciale détermine combien de bits vont être alloués pour la représentation des mantisses, qui sont quantifiées en conséquence. Connaissant la disposition de ces éléments dans le bitstream constitué de plusieurs blocs audio contenant des informations sur le dithering (traitement numérique dont le but est d'obtenir une meilleure approximation d'un signal audio numérique en ajoutant un signal aléatoire de faible amplitude.), le couplage, les exposants, l'allocation des bits, les mantisses. Les valeurs des exposants sont codées en différentiel et en modifiant très peu de ces valeurs, on peut corrompre le bloc entier, et par la suite les blocs qui suivent. Les mantisses sont codées en absolu, et aussi il suffit de modifier, substituer ou permuter des valeurs pour corrompre l'enveloppe spectrale.

Le codeur MPEG-AAC est basé sur les transformations temps-fréquences et génère aussi des paramètres de mise à l'échelle et de quantification, les paramètres du TNS (Time Noise Shaping), les paramètres de prédiction LTP (Long Time Prediction), modifier ces valeurs produit également des effets de perturbation auditive. Par exemple, les vecteurs de coefficients MDCT sont aplatis par division avec l'enveloppe spectrale LPC (transformée en LSP et envoyée au décodeur sous forme d'indices). Les vecteurs de pondération sont divisés en sous-vecteurs, qui sont soumis à une quantification vectorielle pondérée, les index résultants sont envoyés également au décodeur. Dans le cas d'une quantification vectorielle des MDCT, les VQ (Vecteurs de Quantification) non uniformes sont désignés par leur index dans le codebook donné. Avant d'être quantifiés vectoriellement, les MDCT sont entrelacés. En modifiant l'index du vecteur de quantification, ou les indices LSP, on modifie les valeurs spectrales et on répercute l'erreur sur d'autres valeurs, suite à cet entrelacement.

Dans le bitstream, les valeurs spectrales sont disposées de la manière suivante :
x [g] [win] [sfb] [bin], où g indique le groupe, win la fenêtre spectrale utilisée, sfb le facteur d'échelle et bin le coefficient. Pour chaque groupe, le facteur d'échelle est appliqué à tous les coefficients du groupe et sert à réduire le bruit de quantification. Les éléments du bistream pour les facteurs d'échelles sont global_gain, scale_factor_data , hcod_sf[]. Global-gain représente le premier facteur d'échelle et le point de départ pour les facteurs d'échelles qui suivent et sont codés en différentiel par rapport au précédent à l'aide de tables de Huffman standards. Si on modifie la valeur global_gain directement, ou en la remplaçant par une valeur aléatoire ou calculée, tous les facteurs d'échelle qui suivront seront corrompus et le signal audio sera endommagé. On peut effectuer cette modification pour un, plusieurs groupes, ou pour tous, et cela au moins pour une granule et pour au moins une trame. Le global_gain est codé sur 8 bits dans le flux binaire, par exemple, en inversant le sixième bit de poids fort, étant donné que les facteurs d'échelles sont codés en différentiel par rapport au global_gain, le signal est complètement distordu et incompréhensible. Modifier le quatrième bit de poids faible revient à produire une protection plus légère, le flux audio est compréhensible, mais très désagréable à l'écoute.

Comme on vient de l'illustrer, en changeant très peu d'information dans le flux, on détruit de façon importante le signal audio, tout en obtenant une bonne protection pour une information complémentaire de très faible taille. Avantageusement, des réglages sont définis pour le module d'embrouillage, de manière à respecter les valeurs maximales autorisées afin de garantir que le flux audio protégé n'est pas dangereux pour l'ouïe humaine. Par exemple, le module d'embrouillage ne modifie pas les deux bits de poids le plus fort du global_gain, pour éviter des pics sonores importants. Avantageusement, les deux bits de poids le plus fort du global_gain sont substitués avec des zéros, ce qui atténue le signal partiellement et le rend moins compréhensible.

Dans le cas où les valeurs spectrales sont encodées par quadruplets (par ordre fréquentiel croissant), on peut effectuer une permutation de deux valeurs et fausser la composition spectrale : hcod sect_cb[g] [i] [w] [x] [y] [z], ce sont les codes de Huffman pour la section i du groupe g. La permutation entend intervertir les bits de poids le plus faible avec les bits de poids le plus fort. Une autre possibilité est substituer la valeur sect_cb[g] [i] [w] [x] [y] [z] avec une valeur appartenant à la même table de Huffman et de longueur identique.

Si la prédiction est activée, cela est indiqué dans le bitstream par un flag predictor_data_present. La prédiction en arrière, basée sur la redondance spectrale du signal s'effectue à partir d'une structure en treillis, donc chaque élément x est prédit à partir des deux éléments précédents. Un flag predictor_reset indique pour quelle trame on réinitialise la prédiction. Ainsi, en faussant ce flag, on peut perturber la reconstitution des échantillons prédits, en modifiant la valeur initiale ou en indiquant une fausse initialisation. Il suffit de modifier quelques valeurs x dans la trame pour fausser la prédiction des échantillons suivants.

Dans le AAC peut être utilisée la prédiction LTP (Long Term Prediction) qui est une prédiction en avant, les coefficients de prédiction sont envoyés dans la partie Side Information du bitstream, et donc on peut modifier ou remplacer la valeur ltp_lag (le retard) ou modifier l'indication du coefficient ltp_coef qui prend des valeurs attribuées par un tableau.

TNS (Temporal Noise Shaping) est utilisé pour contrôler la forme temporelle du bruit de quantification dans chaque fenêtre spectrale, et représente un des outils les plus puissants de l'AAC. L'ordre et les coefficients du filtre sont calculés pour chaque bande et transmis au décodeur de la même manière que les coefficients LPC. Modifier ces valeurs ou les remplacer va détériorer fortement le signal audio.

Les exemples cités illustrent le principe des modifications sur un flux audio numérique dans le but de le protéger et sont applicables à tout flux ayant des caractéristiques similaires.

## Revendications

1. Procédé pour la distribution de séquences audio numériques nominale dans un flux nominal (10) à un équipement destinataire (8), le flux nominal étant selon un format de flux nominal constitué par une succession de trames comprenant chacune au moins un bloc numérique regroupant des coefficients nominaux, le procédé comprenant
• une étape préparatoire consistant à modifier au moins un coefficient nominal parmi les coefficients nominaux de sorte générer un flux principal modifié (125) conforme au format de flux nominal
• une étape de transmission
- du flux principal modifié (125) et
- par une voie séparée du flux principal modifié (125), d'une information numérique complémentaire (126) permettant de reconstituer le flux nominal à partir d'un calcul, sur l'équipement destinataire, en fonction du flux principal modifié et de l'information complémentaire,
**caractérisé en ce que**
l'étape préparatoire comprend une étape consistant à extraire ledit au moins un coefficient nominal du flux nominal de sorte à former le flux principal modifié;
et **en ce que** l'information complémentaire comprend ledit au moins un coefficient nominal.

2. Procédé selon la revendication 1 dans lequel l'étape préparatoire comprend une étape consistant à remplacer ledit au moins un coefficient nominal extrait par au moins une valeur de remplacement de sorte que le flux principal modifié soit conforme au format de flux nominal.

3. Procédé selon la revendication 2 dans lequel ladite au moins une valeur de remplacement est une valeur aléatoire.

4. Procédé selon la revendication 2 dans lequel ladite au moins une valeur de remplacement est une valeur calculée.

5. Procédé pour la distribution de séquences audio numériques selon l'une des revendications précédentes, **caractérisé en ce que** le flux principal modifié est enregistré sur l'équipement destinataire préalablement à la transmission de l'information complémentaire sur l'équipement destinataire.

6. Procédé pour la distribution de séquences audio numériques selon l'une des revendications 1 à 4, **caractérisé en ce que** le flux principal modifié et l'information complémentaire sont transmis ensemble en temps réel.

7. Procédé pour la distribution de séquences audio numériques selon l'une des revendications précédentes, **caractérisé en ce que** la modification du flux nominal s'applique à au moins une trame audio numérique structurée.

8. Procédé pour la distribution de séquences audio numériques selon l'une des revendications précédentes, **caractérisé en ce que** les modifications sont effectuées de manière à ce que le flux principal modifié soit de la même taille que flux nominal.

9. Procédé pour la distribution de séquences audio numériques selon l'une des revendications précédentes, **caractérisé en ce qu'**il comporte une étape d'analyse d'une partie au moins du flux nominal, ladite étape d'analyse déterminant la nature des modifications desdits coefficients.

10. Procédé pour la distribution de séquences audio numériques selon la revendication 9, **caractérisé en ce que** l'étape d'analyse détermine la modification des coefficients en prenant en compte la structure concrète d'une partie au moins du flux nominal.

11. Procédé pour la distribution de séquences audio numériques selon l'une des revendications précédentes, **caractérisé en ce que** le coefficient nominal extrait est un premier facteur d'échelle d'au moins une trame.

12. Procédé pour la distribution de séquences audio numériques selon l'une des revendications précédentes, **caractérisé en ce que** le coefficient nominal extrait est un coefficient spectral d'au moins une trame.

13. Procédé pour la distribution de séquences audio numériques selon l'une des revendications précédentes, **caractérisé en ce qu'**il comporte une étape préalable de conversion analogique/numérique sous un format structuré, le procédé étant appliqué à un signal audio analogique.

14. Procédé pour la distribution de séquences audio numériques selon l'une des revendications précédentes, **caractérisé en ce que** ce flux comprend au moins une trame audio structurée selon l'un des formats de compression comprenant les formats MPEG-2 layer 3, AAC, CELP, HVXC, HILN, et AC-3.

15. Procédé pour la distribution de séquences audio numériques selon l'une quelconque des revendications précédentes, **caractérisé en ce que** l'information complémentaire comprend au moins une routine numérique apte à exécuter une fonction.

16. Procédé pour la distribution de séquences audio numériques selon l'une quelconque des revendications précédentes, **caractérisé en ce que** ladite information complémentaire est subdivisée en au moins deux sous-parties.

17. Procédé pour la distribution de séquences audio numériques selon la revendication 16, **caractérisé en ce que** lesdites sous-parties de l'information complémentaire sont distribuées par différents médias.

18. Procédé selon la revendication 16, dans lequel lesdites sous-parties de l'information complémentaire sont distribués par le même média.

19. Procédé pour la restitution de séquences audio numériques : d'un flux nominale en format nominal constitué par une succession de trames comprenant chacune au moins un bloc numérique regroupant des coefficients nominaux distribuées selon un procédé conforme à l'une quelconque des revendications précédentes, le procédé pour la restitution comprenant des étapes consistant à :
- recevoir l'information complémentaire (126) et le flux principal modifié (125);
- combiner l'information complémentaire et le flux principal modifié de sorte à reconstituer le flux nominal ;
- décoder le flux nominal ainsi reconstruit selon le format de flux nominal.

20. Procédé pour la restitution de séquences audio numériques selon la revendication 19, **caractérisé en ce que** le flux reconstitué à partir du flux principal modifié et l'information complémentaire est strictement identique au flux nominal.

21. Système pour la distribution de séquences audio numériques dans un flux nominal à un équipement destinataire, le flux nominal étant selon un format de flux nominal constitué par une succession de trames comprenant chacune au moins un bloc numérique regroupant des coefficients nominaux comprenant :
- des moyens de modification (121, 122) agencés pour modifier au moins un coefficient nominal parmi les coefficients nominaux de sorte générer un flux principal modifié conforme au format de flux nominal,
- des moyens agencés pour transmettre le flux principal modifié et par une voie séparée du flux principal modifié, une information numérique complémentaire permettant de reconstituer le flux nominal à partir d'un calcul, sur l'équipement destinataire, en fonction du flux principal modifié et de l'information complémentaire,
**caractérisé en ce que**
- les moyens de modification (121, 122) sont agencés pour extraire ledit au moins un coefficient nominal du flux nominal de sorte à former le flux principal modifié;
- et **en ce que** l'information complémentaire comprend ledit au moins un coefficient nominal.

22. Equipement pour la restitution de séquences audio numériques d'un flux nominale en format nominal constitué par une succession de trames comprenant chacune au moins un bloc numérique regroupant des coefficients nominaux distribuées selon un procédé selon l'une quelconque des revendications 1 à 18, comportant un décodeur (83) selon ledit format nominal, des moyens de réception du flux modifié, et l'information complémentaire **caractérisé en ce qu'**il comporte en outre un moyen de synthèse (82) pour la reconstruction du flux nominal par combinaison dudit flux principal modifié et de ladite information complémentaire.

## Claims

1. A method for distributing nominal digital audio sequences in a nominal stream (10) to a destination equipment (8), the nominal stream being in a nominal stream format composed of a succession of frames, each comprising at least a digital block grouping nominal coefficients, said method comprising:
• a preparatory step consisting in modifying at least one nominal coefficient among the nominal coefficients in order to generate a modified main stream (125) complying with the nominal stream format
• a transmission step
- of the modified main stream (125) and
- on a track separated from the modified main stream (125) of additional digital information (126) making it possible to restore the nominal stream from a calculation on the destination equipment, as a function of the modified main stream and the additional information,
**characterised in that**
the preparatory step includes a step consisting in retrieving said at least one nominal coefficient from the nominal stream so as to form the modified main stream;
and **in that** the additional information includes said at least one nominal coefficient.

2. A method according to claim 1, wherein the preparatory step includes a step consisting in substituting at least a substitutive value for said at least one retrieved nominal coefficient, so that the modified stream complies with the nominal stream format.

3. A method according to claim 2, wherein said at least one substitutive value is a random value.

4. A method according to claim 2, wherein said at least one substitutive value is a calculated value.

5. A method for distributing digital audio sequences according to one of the preceding claims, **characterised in that** the modified main stream is recorded on the destination equipment prior to the transmission of the additional information on the destination equipment.

6. A method for distributing digital audio sequences according to one of claims 1 to 4, **characterised in that** the modified main stream and the additional information are transmitted together in real-time.

7. A method for distributing digital audio sequences according to one of the preceding claims, **characterised in that** the modification of the nominal stream is applied to at least one structured digital audio frame.

8. A method for distributing digital audio sequences according to one of the preceding claims, **characterised in that** the modifications are carried out so that the modified main stream has the same size as the nominal stream.

9. A method for distributing digital audio sequences according to one of the preceding claims, **characterised in that** it includes a step of analysing at least one part of the nominal stream, said analysing step determining the nature of the modifications of said coefficients.

10. A method for distributing digital audio sequences according to claim 9, **characterised in that** the analysing step determines the modification of coefficients while taking into account the concrete structure of at least a part of the nominal stream.

11. A method for distributing digital audio sequences according to one of the preceding claims, **characterised in that** the retrieved nominal coefficient is a scaling factor of at least one frame.

12. A method for distributing digital audio sequences according to one of the preceding claims, **characterised in that** the retrieved nominal coefficient is a spectral coefficient of at least one frame.

13. A method for distributing digital audio sequences according to one of the preceding claims, **characterised in that** it includes a previous step of analogical/digital conversion into a structured format, the method being applied to an analog audio signal.

14. A method for distributing digital audio sequences according to one of the preceding claims, **characterised in that** such stream includes at least one structured audio frame according to one of the compression formats including the MPEG-2 layer 3, AAC, CELP, HVXC, HILN and AC-3 formats.

15. A method for distributing digital audio sequences according to any one of the preceding claims, **characterised in that** the additional information comprises at least a digital routine able to carry out a function.

16. A method for distributing digital audio sequences according to any one of the preceding claims, **characterised in that** said additional information is subdivided in at least two sub-parts.

17. A method for distributing digital audio sequences according to claim 16, **characterised in that** said sub-parts of the additional information are distributed by various media.

18. A method according to claim 16, wherein said sub-parts of the additional information are distributed by the same media.

19. A method for restoring digital audio sequences of a nominal stream in a nominal format composed by succession of frames, each comprising at least a digital block grouping nominal coefficients, distributed according to a method complying with any one of the preceding claims, the method for restoring the sequences comprising the steps consisting in:
- receiving the additional information (126) and the modified main stream (125);
- combining the additional information and the modified main stream in order to restore the nominal stream;
- decoding the nominal stream thus restored according to the nominal stream format.

20. A method for restoring digital audio sequences according to claim 19, **characterised in that** the restored stream from the modified main stream and the additional information is strictly similar to the nominal stream.

21. A system for distributing digital audio sequences in a nominal stream to a destination equipment, the nominal stream being in a nominal stream format composed of a succession of frames each comprising at least one digital block grouping the nominal coefficients including:
- modification means (121, 122) so arranged as to modify at least a nominal coefficient among nominal coefficients in order to generate a modified main stream complying with the nominal stream format,
- means so arranged as to transmit the modified main stream and on a track separated from the modified main stream, additional digital information making it possible to restore the nominal stream from a calculation, on the destination equipment, as a function of the modified main stream and the additional information,
**characterised in that**
- the modification means (121, 122) are so arranged as to retrieve said at least one nominal coefficient from the nominal stream so as to form the modified main stream;
- and **in that** the additional information comprises said at least one nominal coefficient.

22. Equipment for restoring digital audio sequences from a nominal stream in a nominal format composed of a succession of frames, each comprising at least a digital block grouping nominal coefficients, distributed according to a method according to any one of claims 1 to 18, including a decoder (83) according to said nominal format and means for receiving the modified stream and means for receiving the additional information, **characterised in that** it further includes synthesis means (82) for restoring the nominal stream by combining said modified main stream and said additional information.

## Patentansprüche

1. Verfahren für die Abgabe von digitalen Tonfolgen in einem Nennfluß (10) an eine Empfängerausrüstung (8), wobei der Nennfluß einem Format eines Nennflusses entspricht, der aus einer Aufeinanderfolge von Rastern besteht, die jeweils mindestens einen Digitalblock umfassen, der die Nennkoeffizienten zusammenfaßt, wobei das Verfahren folgende Schritte umfaßt:
• Eine vorbereitende Phase, die darin besteht, mindestens einen Nennkoeffizienten unter den Nennkoeffizienten zu modifizieren, damit ein modifizierter Hauptfluß (125) entsprechend dem Nennflußformat erzeugt wird;
• Eine Phase mit der Übertragung
- des modifizierten Hauptflusses (125) und
- einer ergänzenden digitalen Information (126) durch einen vom modifizierten Hauptfluß (125) entfernten Kanal, damit der Nennfluß mit einer Berechnung in der Empfängerausrüstung in Abhängigkeit des modifizierten Hauptflusses und der ergänzenden Information wieder hergestellt werden kann,
**dadurch gekennzeichnet, daß** die vorbereitende Phase eine weitere Phase umfaßt, die darin besteht, den besagten mindestens einen Nennkoeffizienten aus dem Nennfluß zu extrahieren, um den modifizierten Hauptfluß zu bilden,
und **dadurch**, daß die ergänzende Information den besagten mindestens einen Nennkoeffizienten umfaßt.

2. Verfahren nach Anspruch 1, **dadurch gekennzeichnet, daß** die vorbereitende Phase eine weitere Phase umfaßt, die darin besteht, den besagten extrahierten mindestens einen Nennkoeffizienten durch mindestens einen Ersatzwert zu ersetzen, so daß der modifizierte Hauptfluß dem Nennflußformat entspricht.

3. Verfahren nach Anspruch 2, **dadurch gekennzeichnet, daß** der besagte mindestens eine Ersatzwert ein Zufallswert ist.

4. Verfahren nach Anspruch 2, **dadurch gekennzeichnet, daß** der besagte mindestens eine Ersatzwert ein berechneter Wert ist.

5. Verfahren für die Abgabe von digitalen Tonfolgen nach einem beliebigen der vorstehenden Ansprüche, **dadurch gekennzeichnet, daß** der modifizierte Hauptfluß vor der Übertragung der ergänzenden Information an die Empfängerausrüstung in der Empfängerausrüstung aufgezeichnet wird.

6. Verfahren für die Abgabe von digitalen Tonfolgen nach einem beliebigen der vorstehenden Ansprüche 1 bis 4, **dadurch gekennzeichnet, daß** der modifizierte Hauptfluß und die ergänzende Information zusammen in Echtzeit übertragen werden.

7. Verfahren für die Abgabe von digitalen Tonfolgen nach einem beliebigen der vorstehenden Ansprüche, **dadurch gekennzeichnet, daß** die Modifizierung des Nennflusses für mindestens einen strukturierten digitalen Tonraster gilt.

8. Verfahren für die Abgabe von digitalen Tonfolgen nach einem beliebigen der vorstehenden Ansprüche, **dadurch gekennzeichnet, daß** die Modifizierungen so vorgenommen werden, daß der modifizierte Hauptfluß die gleiche Größe hat wie der Nennfluß.

9. Verfahren für die Abgabe von digitalen Tonfolgen nach einem beliebigen der vorstehenden Ansprüche, **dadurch gekennzeichnet, daß** es eine Phase für die Auswertung von mindestens einem Teil des Nennflusses umfaßt, wobei die besagte Auswertungsphase die Art der Modifizierungen der besagten Koeffizienten bestimmt.

10. Verfahren für die Abgabe von digitalen Tonfolgen nach Anspruch 9, **dadurch gekennzeichnet, daß** die Auswertungsphase die Modifizierung der Koeffizienten bestimmt, indem die konkrete Struktur mindestens eines Teils des Nennflusses berücksichtigt wird.

11. Verfahren für die Abgabe von digitalen Tonfolgen nach einem beliebigen der vorstehenden Ansprüche, **dadurch gekennzeichnet, daß** der extrahierte Nennkoeffizient ein erster Maßstabfaktor von mindestens einem Raster ist.

12. Verfahren für die Abgabe von digitalen Tonfolgen nach einem beliebigen der vorstehenden Ansprüche, **dadurch gekennzeichnet, daß** der extrahierte Nennkoeffizient ein spektraler Koeffizient von mindestens einem Raster ist.

13. Verfahren für die Abgabe von digitalen Tonfolgen nach einem beliebigen der vorstehenden Ansprüche, **dadurch gekennzeichnet, daß** es eine vorherige Phase mit Analog-/Digitalwandlung in einem strukturierten Format umfaßt, wobei das Verfahren auf ein analogisches Tonsignal angewendet wird.

14. Verfahren für die Abgabe von digitalen Tonfolgen nach einem beliebigen der vorstehenden Ansprüche, **dadurch gekennzeichnet, daß** dieser Fluß mindestens einen strukturierten Tonraster nach einem der Kompressionsformate umfaßt, die die Formate MPEG-2 layer 3, AAC, CELP, HVXC, HILN und AC-3 umfassen.

15. Verfahren für die Abgabe von digitalen Tonfolgen nach einem beliebigen der vorstehenden Ansprüche, **dadurch gekennzeichnet, daß** die ergänzende Information mindestens eine digitale Routine umfaßt, die zur Ausführung einer Funktion fähig ist.

16. Verfahren für die Abgabe von digitalen Tonfolgen nach einem beliebigen der vorstehenden Ansprüche, **dadurch gekennzeichnet, daß** die besagte ergänzende Information in mindestens zwei Subteile unterteilt ist.

17. Verfahren für die Abgabe von digitalen Tonfolgen nach Anspruch 16, **dadurch gekennzeichnet, daß** die besagten Subteile der ergänzenden Information von verschiedenen Medien abgegeben werden.

18. Verfahren nach Anspruch 16, **dadurch gekennzeichnet, daß** die besagten Subteile der ergänzenden Information vom gleichen Medium abgegeben werden.

19. Verfahren für die Wiederherstellung von digitalen Tonfolgen eines Nennflusses im Nennformat, der von einer Aufeinanderfolge von Rastern gebildet wird, die jeweils mindestens einen digitalen Block umfassen, der Nennkoeffizienten zusammenfaßt, die mit einem Verfahren nach einem beliebigen der vorstehenden Ansprüche abgegeben werden, wobei das Verfahren für die Wiederherstellung mehrere Phasen wie folgt umfaßt:
- Die ergänzende Information (126) und den modifizierten Hauptfluß (125) empfangen;
- Die ergänzende Information und den modifizierten Hauptfluß kombinieren, um den Nennfluß wieder herzustellen;
- Den somit wieder hergestellten Nennfluß nach dem Nennflußformat decodieren.

20. Verfahren für die Wiederherstellung von digitalen Tonfolgen nach Anspruch 19, **dadurch gekennzeichnet, daß** der ab dem modifizierten Hauptfluß und der ergänzenden Information wieder hergestellte Fluß streng identisch mit dem Nennfluß ist.

21. System für die Abgabe von digitalen Tonfolgen in einem Nennfluß an eine Empfängerausrüstung, wobei der Nennfluß nach einem Nennflußformat durch eine Aufeinanderfolge von Rastern gebildet ist, die jeweils mindestens einen digitalen Block umfassen, der Nennkoeffizienten zusammenfaßt und folgende Elemente umfaßt:
- Modifizierungsmittel (121, 122), die so gestaltet sind, daß mindestens ein Nennkoeffizient unter den Nennkoeffizienten modifiziert wird, sodaß ein modifizierter Hauptfluß entsprechend dem Nennflußformat erzeugt wird;
- Mittel, die so gestaltet sind, daß sie den modifizierten Hauptfluß übertragen und in einem vom modifizierten Hauptfluß getrennten Kanal eine ergänzende digitale Information, die ermöglicht, den Nennfluß ab einer Berechnung in der Empfängerausrüstung in Abhängigkeit des modifizierten Hauptflusses und der ergänzenden Information wieder herzustellen,
**dadurch gekennzeichnet, daß**
- Die Modifizierungsmittel (121, 122) so gestaltet sind, daß sie den besagten mindestens einen Nennkoeffizienten aus dem Nennfluß extrahieren, um den modifizierten Hauptfluß zu bilden;
- und **dadurch**, daß die ergänzende Information den besagten mindestens einen Nennkoeffizienten umfaßt.

22. Ausrüstung für die Wiederherstellung von digitalen Tonfolgen eines Nennflusses im Nennformat, der von einer Aufeinanderfolge von Rastern gebildet wird, die jeweils mindestens einen digitalen Block umfassen, der Nennkoeffizienten zusammenfaßt, die mit einem Verfahren nach einem beliebigen der vorstehenden Ansprüche 1 bis 18 abgegeben werden, die einen Decoder (83) nach dem besagten Nennformat umfaßt, Mittel für den Empfang des modifizierten Flusses und ein Mittel für den Empfang der ergänzenden Information, **dadurch gekennzeichnet, daß** sie außerdem ein Synthesemittel (82) für die Wiederherstellung des Nennflusses durch Kombination des besagten modifizierten Hauptflusses und der besagten ergänzenden Information umfaßt.
